# EUROPÄISCHE PATENTSCHRIFT

(11) **EP 3 081 837 B1**
(45) Veröffentlichungstag und Bekanntmachung des Hinweises auf die Patenterteilung: **30.08.2017**
(21) Anmeldenummer: 16165527.9
(22) Anmeldetag: 15.04.2016
(51) Int. Cl.: F16L 37/088

(54) **STECKVERBINDUNG FÜR ROHRLEITUNGEN**
PLUG-IN COUPLING FOR PIPES
RACCORD ENFICHABLE POUR CONDUITES

(30) Priorität: 16.04.2015 DE 102015105834
(43) Veröffentlichungstag der Anmeldung: 19.10.2016
(73) Patentinhaber: Johannes Schäfer vormals Stettiner Schraubenwerke GmbH & Co. KG, 35410 Hungen (DE)
(72) Erfinder: Funk, Hans Georg, 35410 Hungen (DE)
(74) Vertreter: Haar, Lucas Heinz Jörn

(56) Entgegenhaltungen:
- EP-A1- 2 806 200
- DE-A1-102007 059 329

## Beschreibung

Die Erfindung betrifft eine Steckverbindung für Rohrleitungen der im Oberbegriff von Anspruch 1 angegebenen Art.

Eine aus DE 10 2007 059 329 A1 bekannte Steckverbindung der angegebenen Art weist ein Innenteil und ein Außenteil auf, die miteinander verbunden und voneinander getrennt werden können. Das Innenteil ist mit einem Steckzapfen in eine Aufnahmebohrung des Außenteils einsteckbar und dort über ein in radialer Richtung verformbares Halteelement verriegelbar. Auf dem Steckzapfen ist axial verschiebbar eine Lösehülse angeordnet, die gegen die Kraft eines Federelements in eine Entriegelungsstellung bewegbar ist, in der das Halteelement aus der Verriegelungsstellung herausdrängbar ist und der Steckzapfen von dem Außenteil lösbar ist. Die Lösehülse hat eine Schulter mit einem konischen, sich entgegen der Steckrichtung nach außen erweiternden Abschnitt, an dem das Federelement mit radialer Vorspannung anliegt. Das Federelement kann ein O-Ring aus elastomerem Werkstoff sein, wobei der Innendurchmesser des O-Rings im entspannten Zustand 10 bis 30 % kleiner sein kann als der kleinste Außendurchmesser der Lösehülse. Hierdurch kann mit niedriger Axialkraft ein Lösen der Steckverbindung bewirkt werden.

Bei einer aus EP 1 235 023 A1 bekannten Steckverbindung ist an der Lösehülse ein Dichtabschnitt angeordnet, der aus einem elastomeren, thermoplastischen Polymer besteht und um einen Flansch mit konischem Wandabschnitt der Lösehülse herum gegossen und chemisch haftend an dem Flansch befestigt ist. Der Dichtabschnitt weist einen zwiebel- oder glockenartig geformten, radial nach innen geneigten Wandabschnitt auf, der mit seinem vorderen Ende an dem Außenteil anliegt. Beim Entriegeln der Steckverbindung wird der zwiebel- oder glockenartig geformte Wandabschnitt durch eine axiale Kraft zusammengedrückt und radial nach innen in eine Ausnehmung gefaltet, damit die Lösehülse in die Entriegelungsstellung gelangen kann.

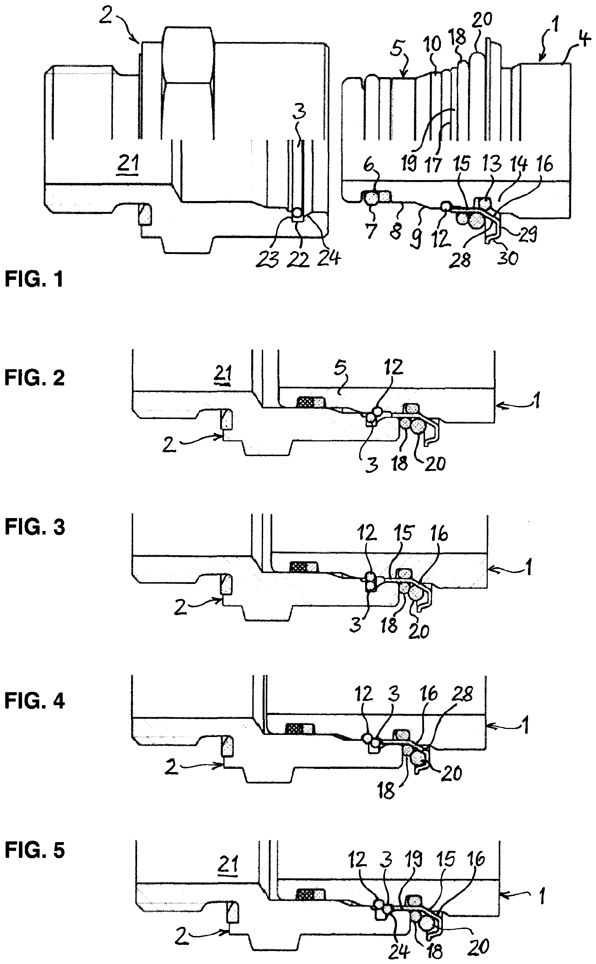

Bei einer aus EP 0 932 789 B1 bekannten Steckverbindung ist ein ringförmiges Federelement aus elastomerem Material zwischen einer Endfläche des Außenteils und einer zur Längsachse des Steckzapfens rechtwinkligen Schulter der Lösehülse angeordnet. Dies hat zur Folge, dass das Federelement in axialer Richtung verformt werden muss, wenn die Lösehülse in die Entriegelungsstellung bewegt werden soll. Die Verformung in axialer Richtung ist mit einem relativ steilen Anstieg der Federkraft des Federelements verbunden. Das Entriegeln der Steckverbindung erfordert daher eine verhältnismäßig große Kraft, was als nachteilig angesehen wird. Durch eine Ausnehmung in der Stirnfläche des Außenteils, an der sich das Federelement abstützt, hat man zwar bei der in Figur 3 des genannten Dokuments gezeigten Ausführungsform der Steckverbindung versucht, den Verlauf des Kraftanstiegs beim Zusammendrücken des Federelements flacher zu gestalten. Der Kraftanstieg ist hierbei aber noch zu steil und die Gestaltung hat den Nachteil, dass sie eine größere Baulänge des Außenteils benötigt.

Der Erfindung liegt die Aufgabe zugrunde, bei einer Steckverbindung der eingangs genannten Art die Abdichtung der Aufnahmebohrung im Außenteil gegenüber der Lösehülse zu verbessern, wobei die Kraft zum Entriegeln des Steckzapfens klein sein und der Kraftanstieg beim Entriegeln eine geringe Steigung haben soll.

Die Aufgabe wird nach der Erfindung durch eine Steckverbindung mit den in Anspruch 1 angegebenen Merkmalen gelöst. Vorteilhafte Weiterbildungen der Erfindung sind in den Unteransprüchen angegeben.

Nach der Erfindung ist zwischen dem Federelement und dem Außenteil ein O-Ring als Dichtring angeordnet, wobei der Schnurdurchmesser des Dichtrings kleiner ist als der Schnurdurchmesser des Federelements, wobei das Federelement in der Verriegelungsstellung mit einer Axialkraft auf den am Außenteil anliegenden Dichtring und auf den konischen Abschnitt der Lösehülse einwirkt und bei einem Entriegelungsvorgang durch den konischen Abschnitt und den Dichtring ausgeweitet werden kann.

Es war mit der Erfindung beabsichtigt und es hat sich gezeigt, dass das Eindringen von Schmutz und Feuchtigkeit auch bei ungünstigen Maßtoleranzen, Verschleiß und der Einwirkung von extremen Seitenkräften auf das Innenteil wirksam verhindert wird. Die Erfindung hat weiterhin den Vorteil, dass die Kombination aus Federelement und Dichtring eine flache Federkennlinie ermöglicht und die Kräfte zum Verbinden und Lösen der Steckverbindung klein bleiben können. Bei der Bewegung der Lösehülse in die Entriegelungsstellung wird nach der Erfindung das Federelement nicht axial zusammengedrückt, sondern relativ zur Lösehülse in Richtung des größeren Durchmessers des konischen Abschnitts bewegt und unterstützt durch den Dichtring, der sich teilweise unter das Federelement schiebt, in radialer Richtung aufgeweitet. Hierdurch steigt die Axialkraft, mit der sich das Federelement an dem Außenteil einerseits und an der Lösehülse andererseits abstützt, nur mit geringer Steigung an, so dass die zum Erreichen der Entriegelungsstellung erforderlich Axialkraft verhältnismäßig niedrig bleibt. Die Erfindung hat weiterhin den Vorteil, dass die axiale Baulänge von Außenteil und Innenteil unverändert bleiben kann und dass keine Veränderung der Aufnahmebohrung im Außenteil erforderlich ist.

Als besonders vorteilhaft hat sich eine Ausgestaltung der Erfindung erwiesen, bei der der Schnurdurchmesser des Dichtrings 20 bis 50% kleiner ist, als der Schnurdurchmesser des Federelements. Weiterhin kann der Dichtring im entspannten Zustand vorzugsweise einen Innendurchmesser haben, der 10 bis 15 %, insbesondere 12 %, kleiner ist als der kleinste Außendurchmesser der Lösehülse. Der Innendurchmesser des Federelements ist im entspannten Zustand vorteilhaft 10 bis 30 %, insbesondere 20 %, kleiner als der kleinste Außendurchmesser der Lösehülse. Für den Kegelwinkel des konischen Abschnitts hat sich ein Winkelbereich von 50° bis 70° als vorteilhaft erwiesen, bevorzugt ist ein Kegelwinkel von 60° vorgesehen. Zur Erleichterung der Montage können das Federelement und der Dichtring zu einer Montageeinheit miteinander verbunden sein.

Die Erfindung wird nachfolgend anhand eines Ausführungsbeispiels näher erläutert, das in der Zeichnung dargestellt ist. Es zeigen
Figur 1 ein Außenteil und ein Innenteil einer Steckverbindung in voneinander
   getrennter Lage,
Figur 2 Außenteil und Innenteil ineinander gesteckt mit am Halteelement von
   außen anliegendem Abstützelement,
Figur 3 Außenteil und Innenteil ineinander gesteckt mit durch das Abstützelement aufgeweitetem Halteelement,
Figur 4 Außenteil und Innenteil am Ende des Verriegelungsvorgangs,
Figur 5 Außenteil und Innenteil im verriegelten und axial gespannten Zustand.

Die in der Zeichnung dargestellte Steckverbindung besteht aus einem Innenteil 1 und einem Außenteil 2, die durch ein Halteelement 3 miteinander verbindbar sind. Das Innenteil 1 hat die Form eines Rohrs und weist ein Ende 4 zur Befestigung einer Druckleitung auf. Das andere Ende des Innenteils 1 ist als Steckzapfen 5 ausgebildet, der in einer Ringnut 6 einen Dichtring 7 trägt. Die Ringnut 6 befindet sich in einem zylindrischen Endabschnitt 8 der Außenfläche des Steckzapfens 5. An den Endabschnitt 8 schließt sich eine Kegelfläche 9 an, deren Durchmesser in Richtung des Endes 4 zunimmt, und an diese eine Zylinderfläche 10. In der Zylinderfläche 10 ist eine Nut vorgesehen, in der sich ein Abstützelement 12 befindet. Das Abstützelement 12 ist als geschlitzter, elastisch verformbarer Runddraht-Sprengring ausgebildet und greift mit der radial inneren Hälfte seines Querschnitts in die daran angepasste Nut ein, in der es mit geringer radialer Vorspannung an dem Steckzapfen anliegt.

Die Zylinderfläche 10 wird zum Ende 4 hin durch eine einen Dichtring 13 aufnehmende Nut begrenzt, an die sich ein Ringbund 14 größeren Durchmessers anschließt. Auf der Zylinderfläche 10 ist axial verschiebbar eine Lösehülse 15 angeordnet, die auf der dem Abstützelement 12 zugekehrten Seite eine Stirnfläche 17 und auf der entgegengesetzten Seite eine Schulter 16 aufweist. Die Lösehülse 15 hat eine zylindrische Mantelfläche 19, deren Außendurchmesser gleich oder um wenige Zehntel Millimeter größer ist als der Außendurchmesser des Abstützelements 12. Auf der Lösehülse 15 ist ein Dichtring 18 und daneben ein ringförmiges Federelement 20 angeordnet, das sich an der Schulter 16 abstützen kann. Der Dichtring 18 und das Federelement 20 bestehen aus O-Ringen aus elastomerem Material und haben im Wesentlichen gleiche Innendurchmesser. Der Dichtring 18 hat einen 20 bis 50% kleineren Schnurdurchmesser als das Federelement. Das Federelement 20 umspannt die Lösehülse 15 mit radialer Vorspannung. Die radiale Vorspannung wird dadurch erreicht, dass das Federelement 20 in entspanntem Zustand einen Innendurchmesser hat, der 10 bis 30 %, insbesondere 20 %, kleiner ist als der Außendurchmesser der Lösehülse 15.

Die Schulter 16 der Lösehülse 15 hat einen konischen Abschnitt 28, dessen Durchmesser entgegen der Steckrichtung, d.h. in Richtung des Endes 4 zunimmt. An das Ende größeren Durchmessers des konischen Abschnitts 28 schließt sich ein sich radial nach außen erstreckender Flansch 29 an, dessen äußerer Randbereich 30 in Richtung des konischen Abschnitts 28 etwa in einem Winkel von 45° zurückgebogen ist. Der konische Abschnitt 28 hat einen Kegelwinkel von 60°. Je nach Elastizität des Federelements 20 kann der Kegelwinkel größer oder kleiner bemessen sein. Die axiale Länge des konischen Abschnitts 28 ist im Wesentlichen gleich der axialen Dicke des Federelements 20 oder größer als diese.

Zur Aufnahme des Steckzapfens 5 weist das Außenteil 2 eine durchgehende Aufnahmebohrung 21 auf, deren Innendurchmesser an die Außendurchmesser der Teile des Steckzapfens 5 angepasst sind. In der Aufnahmebohrung 21 befindet sich eine ringförmige Ausnehmung 22, in der das Halteelement 3 angeordnet ist. Die radiale Tiefe der Ausnehmung 22 ist so bemessen, dass das Halteelement 3 vollständig in die Ausnehmung 22 verdrängt werden kann. Die in Einsteckrichtung hintere Seitenwand 23 der Ausnehmung 22 erstreckt sich senkrecht zur Längsachse der Aufnahmebohrung 21. Die in Steckrichtung vordere Seitenwand 24 der Ausnehmung 22 weist eine als 30°-Fase ausgebildete Anlagefläche für das Halteelement 3 in der Verriegelungsstellung auf. Die zylindrischen Bohrungsflächen beiderseits der Ausnehmung 22 haben den unterschiedlichen Außendurchmessern des Abstützelements 12 und der Mantelfläche 19 entsprechende unterschiedliche Durchmesser. Das Halteelement 3 ist, wie das Abstützelement 12, als geschlitzter Runddraht-Sprengring ausgebildet. Im entspannten Zustand hat das Halteelement 3 einen Innendurchmesser, der mit dem Durchmesser der Zylinderfläche 10 des Steckzapfens 5 im Wesentlichen übereinstimmt.

Zum Verbinden von Innenteil 1 und Außenteil 2 wird der Steckzapfen 5 in die Aufnahmebohrung 21 gesteckt, bis das Abstützelement 12 an dem Halteelement 3 anstößt, siehe Figur 2.

Das weitere Vordringen des Innenteils 1 in der Aufnahmebohrung 21 des Außenteils 2 erfordert, dass das Abstützelement 12 in das Halteelement 3 hinein gedrückt und dieses dabei aufgeweitet wird. Da der Dichtring 18 an dem Außenteil 2 anliegt, werden gleichzeitig der Dichtring 18 und das Federelement 20 auf der Lösehülse 15 in Richtung der Schulter 16 geschoben. Für beides ist eine erhöhte Axialkraft erforderlich, die ein Maximum erreicht, wenn das Halteelement 3 maximal durch das Abstützelement 12 aufgeweitet ist, siehe Figur 3.

Danach fällt die Axialkraft ab, so dass der augenblicklich vorhandene Überschuss an Axialkraft zu einem sprungartigen Hineindrücken des Innenteils 1 in die in Figur 4 gezeigte Stellung im Außenteil 2 führt. Das Federelement 20 wird dabei von dem am Außenteil 2 anliegenden Dichtring 18 weiter auf den konischen Abschnitt 28 der Schulter 16 geschoben und elastisch aufgeweitet und gespannt. Die durch das Spannen erzeugte Federkraft des Federelements 20 drückt nach dem Loslassen das Innenteil 1 in die in Figur 5 gezeigte Stellung zurück, in der das Federelement 20 das Innenteil 1 mit dem Abstützelement 12 gegen das an der Seitenwand 24 abgestützte Halteelement 3 spannt. Die Gegenkraft des Federelements 20 wird von dem Dichtring 18 übertragen und drückt diesen axial gegen das Außenteil 2 und radial nach innen gegen die Mantelfläche 19 der Lösehülse 15. Auf diese Weise wird eine wirksame Abdichtung der Aufnahmebohrung 21 des Außenteils 2 erreicht. Das Lösen der Steckverbindung kann erreicht werden, indem der Steckzapfen 5 und mit diesem die Lösehülse 15 in die Aufnahmebohrung 21 hineingedrückt werden. Hierbei wird das Federelement 20 radial gedehnt und teilweise über den Dichtring 18 gedrückt. Die Axialkraft zum Verschieben der Lösehülse steigt hierbei an, bleibt aber unter einem für das Lösen der Steckverbindung vorteilhaften Wert. Das Halteelement 3 wird durch Verschieben der Lösehülse 15 gemeinsam mit dem Steckzapfen 5 und dem Abstützelement 12 in der Ausnehmung 22 soweit verschoben, bis es an der Seitenwand 23 zur Anlage kommt. Anschließend wird das Halteelement 3 durch die kegelige Stirnfläche 17 der Lösehülse 15 aufgeweitet und radial nach außen in die Ausnehmung 22 verdrängt. Ist diese Entriegelungsstellung erreicht, so kann der Steckzapfen 5 gemeinsam mit der Lösehülse 15 und dem Abstützelement 12 aus dem Außenteil 2 herausgezogen werden. Das Halteelement 3 verbleibt hierbei in der Ausnehmung 22 des Aufnahmeteils 2 zurück.

Die Anwendung der Erfindung ist nicht auf die beschriebene Steckverbindung beschränkt, sondern kann sinngemäß auch bei anderen, zum Schutzumfang der Ansprüche gehörenden Steckverbindungen vergleichbarer Art vorteilhaft angewendet werden.

## Patentansprüche

1. Steckverbindung für Rohrleitungen mit einem Innenteil (1) und einem Außenteil (2), die miteinander verbunden und voneinander getrennt werden können, wobei das Innenteil (1) mit einem Steckzapfen (5) in eine Aufnahmebohrung (21) des Außenteils (2) einsteckbar und dort über ein Halteelement (3) verriegelbar ist, das in einer ersten Ausnehmung (22) in der Aufnahmebohrung (21) des Außenteils (2) oder in der Mantelfläche des Steckzapfens (5) angeordnet ist, beim Steckvorgang durch radiale elastische Verformung in die erste Ausnehmung (22) verdrängbar ist und in einer Verriegelungsstellung von Innen- und Außenteil durch elastisches Zurückverformen in eine zweite Ausnehmung im Steckzapfen (5) oder in der Aufnahmebohrung des Außenteils (2) derart eingreift, dass der Steckzapfen (5) gegen Herausziehen aus der Aufnahmebohrung (21) des Außenteils (2) durch das Halteelement (3) verriegelt ist, wobei eine Lösehülse (15) auf dem Steckzapfen (5) axial verschiebbar angeordnet ist, die mit einer Stirnfläche (17) zumindest teilweise die in Steckrichtung hintere Seitenwand der ersten und/oder zweiten Ausnehmung bildet und eine radiale Schulter (16) aufweist, die einen konischen, sich entgegen der Steckrichtung nach außen erweiternden Abschnitt (28) hat, wobei zwischen der Schulter (16) und dem Außenteil (2) ein in der Verriegelungsstellung in axialer Richtung elastisch vorgespanntes, von einem O-Ring gebildetes Federelement (20) angeordnet ist, das die Lösehülse (15) ringförmig umgreift und an ihr mit radialer Vorspannung anliegt und das in axialer Richtung relativ zur Lösehülse (15) bewegbar ist, wobei die Lösehülse (15) gegen die Kraft des Federelements (20) in eine Entriegelungsstellung bewegbar ist, in der das Halteelement aus der zweiten oder ersten Ausnehmung (22) im Steckzapfen (5) oder in der Aufnahmebohrung des Außenteils (2) herausdrängbar und der Steckzapfen (5) von dem Außenteil (2) lösbar ist, **dadurch gekennzeichnet, dass** zwischen dem Federelement (20) und dem Außenteil (2) ein als O-Ring ausgebildeter Dichtring (18) angeordnet ist, der einen Schnurdurchmesser hat, der kleiner ist als der Schnurdurchmesser des Federelements (20), wobei das Federelement (20) in der Verriegelungsstellung mit einer Axialkraft auf den am Außenteil (2) anliegenden Dichtring (18) und auf den konischen Abschnitt (28) einwirkt und bei einem Entriegelungsvorgang durch den konischen Abschnitt (28) und den Dichtring aufgeweitet werden kann.

2. Steckverbindung nach Anspruch 1, **dadurch gekennzeichnet, dass** der Schnurdurchmesser des Dichtrings 20 bis 50% kleiner ist, als der Schnurdurchmesser des Federelements.

3. Steckverbindung nach einem der vorhergehenden Ansprüche, **dadurch gekennzeichnet, dass** der Dichtring (18) im entspannten Zustand einen Innendurchmesser hat, der 10 bis 15 %, insbesondere 12 %, kleiner ist als der kleinste Außendurchmesser der Lösehülse (15).

4. Steckverbindung nach einem der vorhergehenden Ansprüche, **dadurch gekennzeichnet, dass** der Innendurchmesser des Federelements (20) im entspannten Zustand 10 bis 30 %, insbesondere 20 %, kleiner ist als der kleinste Außendurchmesser der Lösehülse (15).

5. Steckverbindung nach einem der vorhergehenden Ansprüche, **dadurch gekennzeichnet, dass** der Kegelwinkel des konischen Abschnitts (28) 50° bis 70°, insbesondere 60°, beträgt.

6. Steckverbindung nach einem der vorhergehenden Ansprüche, **dadurch gekennzeichnet, dass** sich an den großen Durchmesser des konischen Abschnitts (28) ein Flansch (29) anschließt, der sich radial nach außen erstreckt und eine Anlagefläche für das Federelement (20) in der Entriegelungsstellung bildet.

7. Steckverbindung nach einem der vorhergehenden Ansprüche, **dadurch gekennzeichnet, dass** die durch den Flansch (29) einerseits und einen zylindrischen Abschnitt (19) der Lösehülse (15) andererseits begrenzte axiale Länge des konischen Abschnitts (28) etwa der axialen Dicke des Federelements (20) entspricht.

8. Steckverbindung nach einem der vorhergehenden Ansprüche, **dadurch gekennzeichnet, dass** der äußere Randbereich (30) des Flansches (29) einen größeren Außendurchmesser hat als das Federelement (20).

9. Steckverbindung nach einem der vorhergehenden Ansprüche, **dadurch gekennzeichnet, dass** der äußere Randbereich (30) des Flansches in Richtung des Federelements (20) derart umgebogen ist, dass er in der Entriegelungsstellung das Federelement (20) übergreift.

10. Steckverbindung nach einem der vorhergehenden Ansprüche, **dadurch gekennzeichnet, dass** das Federelement (20) und der Dichtring (18) zu einer Montageeinheit miteinander verbunden sind.

## Claims

1. Plug connection for pipelines, comprising an inner part (1) and an outer part (2) that are interconnected and can be separated from one another, it being possible to insert the inner part (1) by means of a spigot (5) into a receiving bore (21) of the outer part (2) and to lock same in this position by means of a retaining element (3) that is arranged in a first recess (22) in the receiving bore (21) of the outer part (2) or in the lateral surface of the spigot (5), which element can be moved into the first recess (22) during the plug-in process by means of radial elastic deformation and, in a locked position of the inner part and the outer part, engages in a second recess in the spigot (5) or in the receiving bore of the outer part (2) by means of reverse elastic deformation such that the spigot (5) is locked, by means of the retaining element (3), against being pulled out of the receiving bore (21) of the outer part (2), a release sleeve (15) being axially slidably arranged on the spigot (5), which sleeve forms, at least in part and by means of a front surface (17), the lateral wall of the first and/or second recess, which wall is at the rear in the plug-in direction, and which sleeve has a radial shoulder (16) that has a conical portion (28) that widens outwardly counter to the plug-in direction, a spring element (20), which is resiliently preloaded in the axial direction in the locked position and formed by an O-ring, being arranged between the shoulder (16) and the outer part (2), which spring element annularly surrounds the release sleeve (15) and rests thereagainst by means of radial preloading and can be moved relative to the release sleeve (15) in the axial direction, it being possible to move the release sleeve (15) against the force of the spring element (20) into an unlocked position in which the retaining element can be forced out of the second or first recess (22) in the spigot (5) or in the receiving bore of the outer part (2), and it being possible to detach the spigot (5) from the outer part (2), **characterised in that** a sealing ring (18) designed as an O-ring is arranged between the spring element (20) and the outer part (2), which ring has a cross section diameter that is smaller than the cross section diameter of the spring element (20), the spring element (20), in a locked position, acting by means of an axial force on the sealing ring (18) adjacent to the outer part (2) and on the conical portion (28), and it being possible for said element to be expanded by the conical portion (28) and the sealing ring during an unlocking process.

2. Plug connection according to claim 1, **characterised in that** the cross section diameter of the sealing ring is 20 to 50 % smaller than the cross section diameter of the spring element.

3. Plug connection according to any of the preceding claims, **characterised in that**, in the relaxed state, the sealing ring (18) has an inner diameter that is 10 to 15 %, in particular 12 %, smaller than the smallest outer diameter of the release sleeve (15).

4. Plug connection according to any of the preceding claims, **characterised in that**, in the relaxed state, the inner diameter of the spring element (20) is 10 to 30 %, in particular 20 %, smaller than the smallest outer diameter of the release sleeve (15).

5. Plug connection according to any of the preceding claims, **characterised in that** the cone angle of the conical portion (28) is from 50° to 70°, in particular 60°.

6. Plug connection according to any of the preceding claims, **characterised in that** a flange (29) is connected to the large diameter of the conical portion (28), which flange extends radially outwards and forms a contact surface for the spring element (20) in the unlocked position.

7. Plug connection according to any of the preceding claims, **characterised in that** the axial length of the conical portion (28) that is defined both by the flange (29) and a cylindrical portion (19) of the release sleeve (15) approximately corresponds to the axial thickness of the spring element (20).

8. Plug connection according to any of the preceding claims, **characterised in that** the outer edge region (30) of the flange (29) has a larger outer diameter than the spring element (20).

9. Plug connection according to any of the preceding claims, **characterised in that** the outer edge region (30) of the flange is bent in the direction of the spring element (20) such that said region overlaps the spring element (20) in the unlocked position.

10. Plug connection according to any of the preceding claims, **characterised in that** the spring element (20) and the sealing ring (18) are interconnected to form an assembly unit.

## Revendications

1. Raccord emboîtable pour conduites, comprenant une partie intérieure (1) et une partie extérieure (2) qui peuvent être reliées l'une à l'autre et séparées l'une de l'autre, la partie intérieure (1) pouvant être emboîtée dans un trou de réception (21) de la partie extérieure (2) au moyen d'un tenon emboîtable (5) et pouvant y être verrouillée par l'intermédiaire d'un élément de retenue (3) placé dans un premier évidement (22) dans le trou de réception (21) de la partie extérieure (2) ou dans la surface d'enveloppe du tenon emboîtable (5), lequel élément de retenue peut être forcé dans le premier évidement (22) par déformation élastique radiale lors de la procédure d'emboîtement et, dans une position de verrouillage de la partie intérieure et de la partie extérieure, s'insérer à la suite d'une déformation élastique retour dans un deuxième évidement dans le tenon emboîtable (5) ou dans le trou de réception de la partie extérieure (2), de telle sorte que le tenon emboîtable (5) est verrouillé par l'élément de retenue (3) en étant empêché d'être extrait du trou de réception (21) de la partie extérieure (2), une douille de libération (15) étant disposée sur le tenon emboîtable (5) de manière à pouvoir être déplacée axialement, laquelle douille de libération forme avec une surface frontale (17) au moins en partie la paroi latérale arrière, considéré dans la direction d'emboîtement, du premier et/ou du deuxième évidement et comprend un épaulement (16) radial qui présente une section conique (28) s'élargissant vers l'extérieur à l'encontre de la direction d'emboîtement, un élément ressort (20), formé par un joint torique, précontraint élastiquement dans la direction axiale dans la position de verrouillage, étant disposé entre l'épaulement (16) et la partie extérieure (2), lequel élément ressort entoure de manière annulaire la douille de libération (15) et s'applique contre celle-ci par précontrainte radiale et lequel peut être déplacé dans la direction axiale par rapport à la douille de libération (15), laquelle douille de libération (15) peut être déplacée à l'encontre de la force de l'élément ressort (20) dans une position de déverrouillage dans laquelle l'élément de retenue peut être déplacé hors du deuxième ou du premier évidement (22) dans le tenon emboîtable (5) ou dans le trou de réception de la partie extérieure (2), et le tenon d'emboîtement (5) peut être libéré de la partie extérieure (2), **caractérisé en ce qu'**une bague d'étanchéité (18) réalisée sous la forme d'un joint torique est disposée entre l'élément ressort (20) et la partie extérieure (2), laquelle bague d'étanchéité présente un diamètre de tore inférieur au diamètre de tore de l'élément ressort (20), l'élément ressort (20), dans la position de verrouillage, agissant au moyen d'une force axiale sur la bague d'étanchéité (18) s'appliquant contre la partie extérieure (2) et sur la section conique (28), et pouvant être élargi par la section conique (28) et la bague d'étanchéité lors d'une procédure de déverrouillage.

2. Raccord emboîtable selon la revendication 1, **caractérisé en ce que** le diamètre de tore de la bague d'étanchéité est de 20 à 50 % inférieur au diamètre de tore de l'élément ressort.

3. Raccord emboîtable selon l'une des revendications précédentes, **caractérisé en ce que** la bague d'étanchéité (18), dans l'état détendu, présente un diamètre intérieur qui est de 10 à 15 %, en particulier de 12 %, inférieur au plus petit diamètre extérieur de la douille de libération (15).

4. Raccord emboîtable selon l'une des revendications précédentes, **caractérisé en ce que** le diamètre intérieur de l'élément ressort (20), dans l'état détendu, est de 10 à 30%, en particulier de 20 %, inférieur au plus petit diamètre extérieur de la douille de libération (15).

5. Raccord emboîtable selon l'une des revendications précédentes, **caractérisé en ce que** l'angle de conicité de la section conique (28) est compris entre 50° et 70°, en particulier s'élève à 60°.

6. Raccord emboîtable selon l'une des revendications précédentes, **caractérisé en ce que** le grand diamètre de la section conique (28) se poursuit par une bride (29) qui s'étend radialement vers l'extérieur et forme une surface d'appui pour l'élément ressort (20) dans la position de déverrouillage.

7. Raccord emboîtable selon l'une des revendications précédentes, **caractérisé en ce que** la longueur axiale de la section conique (28), laquelle longueur est délimitée par la bride (29) d'une part et par une section cylindrique (19) de la douille de libération (15) d'autre part, correspond approximativement à l'épaisseur axiale de l'élément ressort (20).

8. Raccord emboîtable selon l'une des revendications précédentes, **caractérisé en ce que** la zone de bord extérieure (30) de la bride (29) présente un diamètre extérieur supérieur à celui de l'élément ressort (20).

9. Raccord emboîtable selon l'une des revendications précédentes, **caractérisé en ce que** la zone de bord extérieure (30) de la bride est recourbée en direction de l'élément ressort (20) de telle sorte qu'elle recouvre l'élément ressort (20) dans la position de déverrouillage.

10. Raccord emboîtable selon l'une des revendications précédentes, **caractérisé en ce que** l'élément ressort (20) et la bague d'étanchéité (18) sont reliées l'un à l'autre pour former une unité de montage.
